# FASCICULE DE BREVET EUROPEEN

(11) **EP 1 186 169 B1**
(45) Date de publication et mention de la délivrance du brevet: **27.08.2003**
(21) Numéro de dépôt: 00936965.3
(22) Date de dépôt: 29.05.2000
(51) Int. Cl.: H04N 7/16, H04N 7/24

(54) **DISPOSITIF RECEPTEUR/DECODEUR DE TELEVISION NUMERIQUE A LECTURE INTERACTIVE DE PROGRAMME DE TELEVISION PREALABLEMENT ENREGISTRE**
EMPFÄNGER/DEKODIERER FÜR DIGITALE TV-SIGNALE MIT INTERAKTIVER PROGRAMMEINLESUNG
DIGITAL TELEVISION RECEIVER/DECODER DEVICE WITH PLAYBACK FOR INTERACTIVE PRE-RECORDED TELEVISION PROGRAMME

(30) Priorité: 02.06.1999 FR 9906957
(43) Date de publication de la demande: 13.03.2002
(73) Titulaire: Thomson multimedia Digital France, 92100 Boulogne (FR)
(72) Inventeur: BASSET, Jean-Claude, F-75013 Paris (FR)
(74) Mandataire: Kerber, Thierry
(86) Numéro de dépôt international: FR0001463
(87) Numéro de publication internationale: WO00076213

(56) Documents cités:
- EP-A- 0 803 826
- EP-A- 0 827 340
- EP-A- 0 852 443
- WO-A-98/43415
- GB-A- 2 327 837
- US-A- 5 818 935
- US-A- 5 900 905

## Description

La présente invention se rapporte au domaine de la télévision numérique, et plus particulièrement à l'interactivité entre un programme de télévision préalablement enregistré et une application logiciel choisie, telle qu'une application Internet ou analogue.

Elle s'applique plus particulièrement à l'enseignement à distance (téléformation) dans lequel l'application logiciel comprend un cours de formation choisi, destiné à être délivré à distance à un utilisateur.

En télévision numérique, les signaux de télévision sont souvent diffusés à travers un milieu de communication prédéterminé (voie hertzienne, satellite, câble,...) pour être reçus/décodés par un récepteur/décodeur de télévision numérique approprié.

Généralement un tel récepteur/décodeur comprend (voir p. ex. EP-A-0 827 340):
- une interface d'entrée propre à recevoir des signaux de télévision numérique en provenance d'un réseau de diffusion prédéterminé et à délivrer un flux numérique de signaux de télévision ;
- un module démultiplexeur/extracteur propre à extraire dans le flux numérique des séquences numériques relatives à un programme de télévision choisi ; et
- un module décodeur propre à transformer les séquences numériques ainsi extraites en des signaux de télévision compatibles avec un module de visualisation.

La Demanderesse s'est posée le problème de fournir un récepteur/décodeur capable d'enregistrer un programme de télévision numérique choisi, le cas échéant en l'absence de l'utilisateur, et de lire ledit programme enregistré, à la demande de l'utilisateur, en interaction et en synchronisme avec une application logiciel, par exemple une application logiciel de type Internet ou analogue, à des fins de téléformation ou analogue.

La présente invention apporte justement une solution à ce problème.

Elle porte sur un dispositif récepteur/décodeur de télévision numérique du type précité.

Selon une définition générale de l'invention, le dispositif récepteur/décodeur comprend en outre :
- un module d'enregistrement et de lecture de programme de télévision numérique ;
- un module de traitement propre à mettre en oeuvre une application logiciel susceptible de contenir des informations d'initialisation et de marquage relatives au moins au début et à la fin d'un programme de télévision numérique choisi ainsi qu'à la réception/extraction des séquences numériques relatives audit programme de télévision choisi, ledit module de traitement étant propre à recevoir lesdites informations d'initialisation et de marquage en provenance de l'application logiciel, et à les comparer avec le flux numérique de télévision provenant du module démultiplexeur/extracteur, ledit module de traitement étant propre en outre à commander, en réponse à une comparaison positive, l'enregistrement des séquences numériques relatives audit programme de télévision choisi ainsi que les informations d'initialisation et de marquage, dans le module d'enregistrement/lecture, et
- un module d'exécution propre, à la demande d'un utilisateur, à lancer la lecture des séquences numériques relatives audit programme de télévision ainsi enregistré, en synchronisme avec l'exécution de l'application logiciel à l'aide des informations d'initialisation et de marquage accompagnant le programme de télévision ainsi enregistré.

Ainsi, grâce à l'invention, il est non seulement possible d'enregistrer un programme de télévision numérique choisi, le cas échéant en l'absence de l'utilisateur, mais surtout de lire ledit programme enregistré en interactivité, à la demande de l'utilisateur, avec une application logiciel, de type Internet ou analogue, à des fins de téléformation par exemple.

En pratique, le module d'exécution est propre à lancer la lecture des séquences numériques relatives au programme de télévision choisi et l'exécution de l'application logiciel sur le même module de visualisation.

Selon un aspect de l'invention, le dispositif récepteur/décodeur comprend des moyens d'interface homme/machine dont l'actionnement permet à l'utilisateur d'interagir simultanément et en synchronisme dans la lecture du programme de télévision enregistré et dans l'exécution de l'application Internet.

Selon un mode de réalisation préféré de l'invention, le dispositif récepteur/décodeur comprend un module de communication apte à communiquer avec un serveur distant selon un protocole de communication prédéterminé de type Internet, ledit module de communication étant du type comprenant des moyens de traitement Internet propres à coopérer avec des moyens de mémorisation aptes à stocker un navigateur Internet servant à la navigation sur l'Internet et au téléchargement de l'application logiciel dans lesdits moyens de mémorisation.

De préférence, les moyens de traitement Internet sont propres à coopérer avec le module de visualisation et les moyens d'interface homme/machine.

Selon une autre caractéristique de l'invention, le module démultiplexeur/extracteur est apte à extraire les informations d'initialisation et de marquage du programme de télévision et à les transmettre aux moyens de traitement Internet, afin de permettre, à la demande de l'utilisateur, l'exécution de l'application Internet en local et/ou en coopération avec le serveur distant, en synchronisme avec la lecture du programme de télévision enregistré.

Selon encore une autre caractéristique de l'invention, les moyens de traitement Internet sont propres, en coopération avec les moyens de traitement du récepteur/décodeur, à piloter le module d'enregistrement/lecture.

En pratique, les moyens de traitement Internet sont propres à délivrer au module d'enregistrement/lecture des ordres de type arrêt, pause, démarrage pause, démarrage, ralenti, accélération, arrière, saut avant, saut arrière, etc.

Selon un autre aspect de l'invention, le dispositif récepteur/décodeur comprend en outre un module de composition d'images propre à recevoir les images vidéo issues du module décodeur ainsi que les images graphiques issues des moyens de traitement Internet, afin de les combiner, selon un mode de composition d'images choisi.

En pratique, le mode de composition d'images est de type surimpression, multifenêtrage, texte, association d'images. Par exemple, le module de composition d'images comprend :
- une première mémoire propre à contenir les images vidéo issues du module décodeur ;
- une seconde mémoire propre à contenir les informations graphiques issues des moyens de traitement Internet ;
- une troisième mémoire propre à contenir un programme de composition d'images ;
- des moyens de traitement d'images propres à extraire les informations choisies dans les première et seconde mémoires selon le programme de composition afin de réaliser les images composites ;
- un module de synchronisation du module de visualisation afin de synchroniser la composition d'images issues des deux mémoires.

Avantageusement, le dispositif récepteur/décodeur comprend une interface de type série et/ou une interface de type liaison haut débit afin de connecter des équipements périphériques de type imprimante, système vidéo/caméra, chaîne audio, périphérique vidéo.

La présente invention a également pour objet un procédé de traitement de télévision numérique mis en oeuvre par le dispositif récepteur/décodeur selon l'invention.

D'autres caractéristiques et avantages de l'invention apparaîtront à la lumière de la description détaillée ci-après et des dessins dans lesquels :
- la figure 1 représente schématiquement les différents éléments du récepteur/décodeur selon l'invention ;
- la figure 2 est un organigramme illustrant l'enregistrement d'un programme de télévision choisi ainsi que l'exécution simultanée et en synchronisme de la lecture de ce programme enregistré avec une application logiciel de type Internet selon l'invention ; et
- la figure 3 illustre la composition d'images à partir du flux numérique émanant du programme de télévision enregistré et du flux numérique émanant de l'application logiciel selon l'invention.

D'une manière générale, la présente description possède des éléments de dessins de caractère certain. A ce titre, ces éléments de dessins peuvent servir à mieux faire comprendre la description de l'invention mais aussi contribuer, le cas échéant, à la définition de celle-ci.

La présente invention s'applique à tout réseau de diffusion de signaux de télévision numérique. Ainsi elle s'étend aussi bien à un réseau de diffusion de type hertzien que satellitaire, câble, filaire, micro-ondes ou analogue.

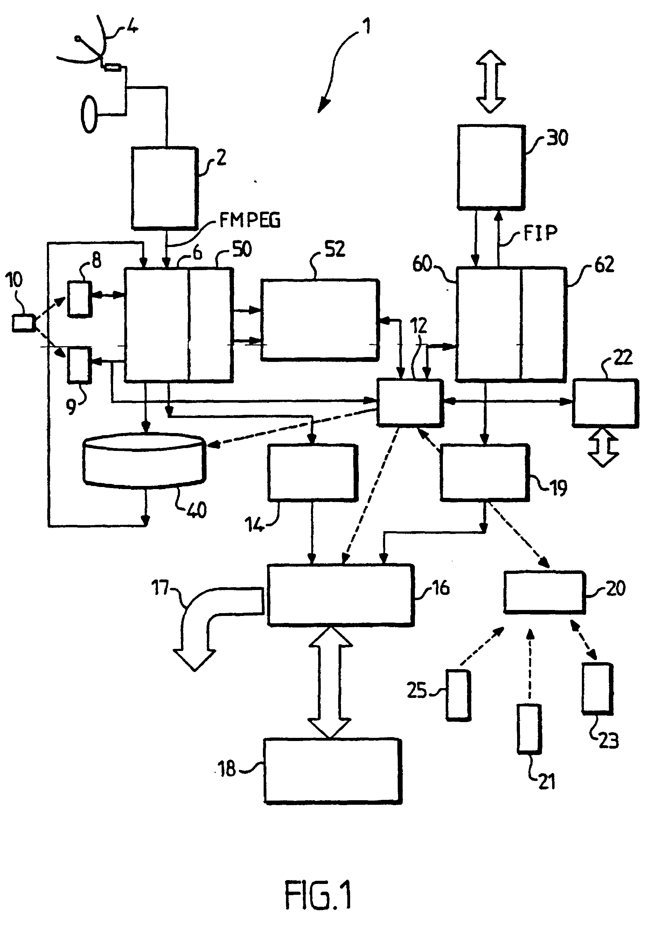

En référence à la figure 1, un dispositif récepteur/décodeur de télévision numérique 1 comprend une interface d'entrée 2 reliée à une antenne 4 apte à communiquer avec une pluralité de satellites (dans le cas d'une diffusion par satellites).

L'interface d'entrée 2 comprend un tuner (non représenté) qui sélectionne un canal désiré dans une gamme de fréquences choisies. Ce canal correspond à un programme de télévision pour lequel l'utilisateur a des droits d'accès. Le signal en sortie du tuner est ensuite démodulé de façon cohérente en traversant un étage de démodulation (non représenté).

En pratique, le flux de données d'images numériques FMPEG issu de l'interface d'entrée 2 est au format MPEG-2 ou MPEG-4 (MOTION PICTURE EXPERTS GROUP), correspondant à une norme de compression d'images animées. En cas de besoin en ce qui concerne la télévision numérique, on pourra se référer au livre de Hervé BENOIT : "La télévision numérique", Editions Dunod, Paris, 1998.

En sortie de l'étage de démodulation, le flux numérique FMPEG attaque un bloc de démultiplexage 6 permettant la sélection, au moyen de filtres choisis, de trains élémentaires de signaux sous forme de paquets au format MPEG-2, correspondant au programme choisi par l'utilisateur.

En raison du mode de diffusion utilisé (satellite) qui est sujet à erreurs, le multiplex des paquets élémentaires MPEG-2 est de préférence ici du type "transport".

En cas de communication d'informations sujettes à péage, le bloc de démultiplexage 6 est en outre combiné à un module désembrouilleur 8 qui assure la sélection et le désembrouillage des paquets du programme de télévision choisi. Le module de désembrouillage 8 comprend un module de contrôle d'accès apte à coopérer avec une carte à mémoire 10 fournissant une clé de désembrouillage à l'attention du processeur 12 du récepteur/décodeur.

En pratique, le processeur 12 dialogue avec le module de contrôle d'accès 8 en émettant des messages d'accès conditionnel ECM ("Entitlement Control Message") ou EMM ("Entitlement Management Message) et reçoit des messages de contrôle CW.

Les paquets MPEG désembrouillés, issus du bloc de démultiplexage 6 sont ensuite appliqués à un module de décodage 14 de type MPEG.

Les signaux numériques issus du module de décodage 14 sont reconvertis en signaux analogiques par un module d'encodage vidéo 16 à des fins de visualisation directe sur un module de visualisation 18 ou de stockage video sur un magnétoscope analogique.

Les signaux numériques issus du module de décodage 14 peuvent aussi être acheminés à une chaîne de traitement vidéo numérique via une liaison numérique 17 haut débit de type 1394.

Le processeur 12 commande les liaisons entre modules, notamment les modules 2, 6, 8, 10, 14, 16, 17. Il interprète les ordres en provenance d'une ou plusieurs commandes à distance 20, 21 (boîtier de télécommande), 23 (clavier infrarouge ou radiofréquence), 25 (terminal tactile infrarouge). Il gère le lecteur 8 de carte à mémoire ainsi que les interfaces homme/machine généralement présentes, telles que, par exemple, le dispositif d'affichage 18, une liaison série 22 de type USB vers un ordinateur ou station de développement (non représenté), le clavier de saisie infrarouge ou radiofréquence 23, une seconde interface vers un lecteur 9 d'une seconde carte à mémoire pour d'autres droits d'accès, le cas échéant.

La Demanderesse s'est posée le problème d'associer à un tel récepteur/décodeur 1 des fonctions nouvelles permettant non seulement d'enregistrer un programme de télévision numérique choisi, le cas échéant en l'absence de l'utilisateur, mais surtout de lire ledit programme enregistré en interactivité, à la demande de l'utilisateur, avec une application logiciel, par exemple de type Internet ou analogue.

Généralement, pour visualiser un programme de télévision numérique diffusé par un réseau de diffusion de télévision numérique (satellite, câble, ...), la présence de l'utilisateur est requise au moment de la diffusion. Sinon, il convient de procéder à l'enregistrement du programme sur un équipement approprié afin de lire ultérieurement l'enregistrement ainsi mémorisé.

Mais, à ce jour, l'enregistrement d'un programme de télévision numérique ne permet pas d'utiliser l'interactivité susceptible d'être associée au moment de la diffusion initiale du programme de télévision numérique.

Il en résulte qu'un programme de télévision numérique préalablement enregistré est généralement passif et empêche la participation de l'utilisateur pour des applications telles que jeux, téléachat, formation participative, téléformation, enseignement à distance, etc.

La présente invention remédie notamment à cet inconvénient.

Elle permet notamment d'associer une application logiciel WEA susceptible d'être exécutée en synchronisme avec la lecture du programme de télévision préalablement enregistré ST, afin de permettre la participation active de l'utilisateur.

De préférence, l'application logiciel WEA est transmise par un réseau de communication prédéterminé, de type réseau Internet ou analogue. Mais, on peut aussi utiliser une application logiciel disponible sur un autre support tel qu'un CD-ROM, DVD, ou analogue.

L'accès à l'Internet peut être réalisé selon des solutions terrestres (câble, réseau téléphonique commuté, ADSL pour "assymetric digital subscriber line) ou selon des solutions avec satellites.

Dans le cas d'un accès Internet par satellite, la transmission de l'application logiciel de type Internet WEA dans le sens opérateur/serveur vers l'utilisateur peut être incluse avantageusement dans les canaux de diffusion de télévision numérique.

Dans le cas d'un accès Internet par voie terrestre, la transmission de l'application WEA dans le sens opérateur/serveur vers l'utilisateur peut aussi être transmise selon un milieu de communication séparé de la diffusion du programme de télévision, par exemple selon une liaison filaire, via un modem 30.

Le mode de réalisation de synchronisation du programme de télévision ST avec l'application Internet WEA, que l'on décrira plus en détail ci-après, est similaire dans les deux types de transmission (satellite ou modem) de l'application Internet WEA.

Très avantageusement, l'application logiciel WEA est de type téléformation dans laquelle un travail coopératif entre l'élève et le formateur est nécessaire. Ce travail coopératif est avantageusement susceptible d'être mis en place selon l'invention grâce à une interactivité entre une séquence télévisuelle ST obtenue en mode diffusion (cours magistral), puis enregistrée sur un support approprié (disque dur), et un travail personnel et une évaluation du suivi de formation, disponible et mise en oeuvre dans une application logiciel WEA.

Avant la diffusion, la séquence télévisuelle ST qui sera enregistrée sur un disque dur, est d'abord préalablement marquée au niveau des sous-ensembles significatifs dans le flux numérique MPEG. Les indicateurs de séquence sont des points de synchronisation qui précisent le rang des sous-ensembles et qui permettront ainsi à l'application logiciel d'être synchrone sous-séquence par sous-séquence.

Le marquage des séquences qui sert de repère au mode interactif s'effectue directement dans le flux numérique transmis MPEG.

Le marquage peut s'effectuer au niveau des groupes d'images (GOP pour "Group Of Picture") ou des images de compression de référence (I Picture). Ce marquage utilise, à l'émission, des codeurs/multiplexeurs adaptés pour inclure les références dans les flux MPEG-2. En lecture, ou réception, un dispositif récepteur/décodeur non équipé du mode interactif ne visualisera que les séquences mémorisées sans interférence des marqueurs.

Avantageusement, en variante, les indicateurs mis en place par l'invention peuvent utiliser des indicateurs d'instant de décodage d'une unité d'accès MPEG DTS (Decoding Time Stamp) ou bien les indicateurs PTS, c'est-à-dire les indicateurs d'instant de présentation d'une trame sonore ou une image décodée de type MPEG.

Grâce à ces indicateurs, il n'est pas nécessaire de modifier le flux MPEG-2. Ainsi, les démultiplexeurs standard MPEG-2 sont susceptibles d'assurer en standard les extractions des indicateurs comme ceux du type PST.

Selon l'invention, il est donc prévu, en sortie du module de démultiplexage 6, un module d'extraction 50 propre à extraire les indicateurs, mentionnés ci-avant, par exemple les indicateurs du type PST.

Selon l'invention, un module interpréteur 52 est connecté au module d'extraction 50 pour interpréter les indicateurs ainsi extraits, selon le système d'information SI de la norme de télévision numérique MPEG-2.

Le déclenchement de l'enregistrement nécessite de connaître l'instant de début de la séquence télévisuelle ou programme de télévision ST.

L'utilisateur peut programmer sa demande d'enregistrement de plusieurs manières.

Selon une première manière, la demande d'enregistrement est transmise sur le réseau Internet à partir d'un guide de programmes. L'utilisateur fait sa sélection et demande l'enregistrement. Au moment de cette demande, le récepteur/décodeur de l'utilisateur communique son identité (référence interne mémorisée dans le récepteur/décodeur ou dans une carte de contrôle). Le processus de l'enregistrement suit donc les étapes suivantes :
1) identification du récepteur/décodeur,
2) choix de la séquence télévisuelle ST,
3) mémorisation du choix de la séquence ST,
4) émission d'un code de démarrage,
5) enregistrement sur disque dur 40, et
6) fin d'enregistrement.

La séquence télévisuelle ST à enregistrer est émise dans le flux de télévision suivant la programmation du centre de diffusion. Avant l'émission de la séquence télévisuelle ST, une routine prédéterminée permet de démarrer l'enregistrement dans le récepteur/décodeur. Cette routine reprend le code de démarrage et le code d'identification mentionné ci-avant. L'enregistrement se termine par un code d'arrêt associé à l'identification du récepteur/décodeur.

Une autre manière, peut-être plus simple au niveau de la commande, consiste à recevoir du réseau Internet, (via une connexion filaire et un modem), suite à une demande semblable à celle du mode précité, un code d'identification de début de séquence télévisuelle ST et de fin de séquence télévisuelle ST.

Le récepteur/décodeur attend d'identifier le début de la séquence ST suivant le code reçu et enregistre jusqu'à réception de la fin de séquence ST.

En pratique, chaque séquence télévisuelle ST est identifiée et émise sans référence aux utilisateurs.

Par ailleurs, les codes de début de séquence et de fin de séquence sont susceptibles d'être sécurisés par un code d'identification de l'utilisateur (carte opérateur ou identification du récepteur/décodeur).

Un autre mode de réalisation consiste à utiliser les tables indiquant le début d'un événement, tables appelées EIT (Event Information Table).

Ces tables transmettent des informations aux utilisateurs. Ces informations comportent notamment le type du programme ainsi que son éventuelle diffusion, c'est-à-dire "à venir dans quelques instants" ou "en cours".

Une autre solution consiste à identifier la séquence ST par un moyen externe ou interne afin de pré-programmer cette identification dans le dispositif récepteur/décodeur selon l'invention.

Ainsi, par exemple, dans un programme général de cours, le dispositif selon l'invention attend l'identification de la séquence en clair ou en embrouillé ST pour effectuer l'enregistrement.

Le lancement de la lecture du programme de télévision ST, enregistré conformément au mode d'enregistrement décrit ci-avant, s'effectue à la demande de l'utilisateur. Dès le début de la lecture du programme de télévision ST, le récepteur/décodeur se connecte à l'application WEA. C'est la reconnaissance de l'identification du programme de télévision ST qui permet le lancement de l'application WEA. L'interactivité entre l'application WEA et le programme de télévision ST est réalisée grâce à la reconnaissance des marqueurs dans le flux MPEG.

Lorsque l'application logiciel WEA est diffusée sur le même support que le flux numérique de télévision, l'interface d'entrée et l'étage de démodulation peuvent être communs. Le flux numérique pour l'application logiciel WEA se présente alors sous un codage similaire à celui du flux de télévision FMPEG et les séquences télévisuelles ST sont dissociées des séquences relatives à l'application logiciel WEA, les volumes de transmission pour les séquences video étant beaucoup plus longues que les séquences interactives liées à l'application logicielle WEA.

En variante, un démodulateur Internet peut être mis en parallèle avec le démodulateur de télévision, et le récepteur/décodeur possède deux dispositifs de démodulation canal et un seul accès au support transmis. Il est à remarquer que le mode Internet peut être indépendant du codage MPEG 2. Il est à remarquer également que cette réalisation peut se simplifier dans le cas où le codage Internet s'effectue dans le même multiplex par exemple mode IN-BAND.

Lorsque le flux télévision et le flux Internet émanent de deux supports différents (figure 1), le mode Internet peut utiliser par exemple le réseau téléphonique commuté ou numérique (RNIS). Dans ces conditions, le système Internet comprend son modem 30 propre et une chaîne de traitement du protocole de communication IP (Internet Protocol).

Dans les deux types de raccordement, la chaîne de démultiplexage transport émet des informations à la chaîne Internet afin de permettre l'exécution des commandes Internet liées aux différents marqueurs de la séquence enregistrée ST.

Il est à observer que le cours ou l'application Internet WEA pourra être rejoué facilement car l'interactivité est liée à la séquence télévisuelle enregistrée ST.

Pour une même diffusion d'une séquence télévisuelle ST par le canal de diffusion TV, il peut correspondre à différentes actions pédagogiques. Ainsi, pour un même encombrement du canal TV, on peut associer différents degrés dans la formation.

Le niveau correct de la formation peut être mis en action par une application Internet adaptée au réseau Internet par exemple le protocole "WWW" ou le protocole "HTTP".

On peut ainsi, par exemple, distinguer les formations de niveau 0 où aucune formation n'est réellement proposée, le programme TV est directement reçu et visualisé par des téléspectateurs qui sont ainsi passifs.

Dans un niveau élémentaire, les séquences ST peuvent être contrôlées afin de vérifier la compréhension instantanée de l'utilisateur.

Dans un niveau moyen, le contenu des séquences ST télévisuelles ST peut être validé et une animation peut être proposée dans la compréhension de la formation, par exemple sous la forme de questions/réponses.

Dans un niveau supérieur, il peut être prévu d'adjoindre des exercices avec des références à d'autres connaissances et une évaluation de la connaissance.

Enfin, dans le niveau perfectionnement, il est prévu d'adjoindre des séquences pour approfondir et évaluer le niveau de compréhension et d'assimilation du contenu.

A chaque niveau de formation, il peut être associé un mode expert dans lequel un rendez-vous peut être pris avec un expert destiné à intervenir dans le déroulement de la séquence pédagogique (mode télé-présence).

L'expert peut intervenir à sa propre demande, du fait de la surveillance du déroulement de la formation au niveau du programme sur le centre de diffusion ou serveur.

L'intervention de l'expert peut, au contraire, intervenir à la demande de l'utilisateur qui veut avoir un contact direct pédagogique.

Le mode expert peut être du type message soit par dialogue direct avec un message du type e-mail connecté, soit par un mode de type vidéo (visiophone, visioconférence).

En mode expert, la gestion du rendez-vous doit être réalisée entre l'expert et l'utilisateur. L'établissement du rendez-vous nécessite de déterminer l'instant de connexion sur le réseau Internet et l'exécution du programme de formation.

L'utilisateur, pour sa formation, peut être dans l'ignorance des niveaux hiérarchiques. Il suit un cycle de formation qui lui indique les éléments du programme de télévision ainsi que les éléments de l'application Internet qui sera exécutée.

Le choix de la formation peut être fait selon plusieurs types.

Lorsque le choix est volontaire, l'utilisateur peut consulter un catalogue sur le réseau Internet ou consulter un cycle de formation à suivre. Au contraire, si le choix est imposé, le cycle de formation est imposé soit sur un référentiel Internet, soit fourni sur une carte du type carte bancaire qui donne les éléments au processeur Internet pour faire la demande des marqueurs d'enregistrement.

En référence à la figure 1, le dispositif récepteur/décodeur selon l'invention comprend pour la connexion Internet, des moyens de traitement Internet 60 assurant la liaison suivant le protocole Internet IP et des moyens de mémorisation de logiciels 62 permettant la navigation sur le réseau Internet. Le dispositif Internet est conforme aux spécifications du W3C et intègre une machine virtuelle JAVA.

Le dispositif récepteur/décodeur selon l'invention est équivalent fonctionnellement à un navigateur Internet et reçoit par téléchargement des applications Internet (flux IP pour "Internat protocol") assurant un fonctionnement local (module logiciel de type applet/java).

En fonctionnement connecté avec le réseau Internet, le dispositif récepteur/décodeur selon l'invention est un équipement standard Internet utilisant le module de visualisation 18 et le clavier 21 du dispositif récepteur/décodeur.

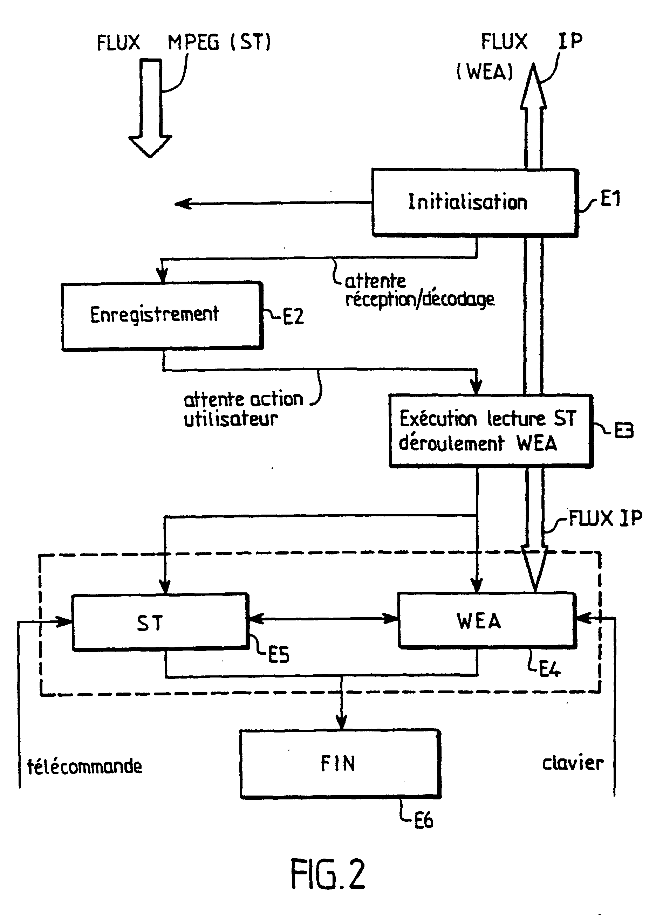

En référence à la figure 2, on a décrit les différentes fonctionnalités du dispositif récepteur/décodeur selon l'invention.

Tout d'abord, il est prévu une étape E1 d'initialisation de l'enregistrement de la séquence télévisuelle ST. Cette étape d'initialisation consiste à disposer des informations issues du programme de formation ou application Internet permettant de programmer la fonction d'enregistrement ainsi que les informations pour démarrer directement par Internet le programme de formation.

L'application Internet WEA donne, via le réseau Internet (flux IP), les informations pour l'enregistrement.

Ces informations comprennent notamment les marqueurs de la fonction transport des paquets élémentaires au format MPEG-2, pour la reconnaissance du début et de la fin du programme de télévision ST.

Ces informations comprennent aussi les informations de positionnement de la fonction d'accord du récepteur/décodeur (choix du canal, fréquence, paramètres de transmission).

Enfin, les informations de réglage de la parabole sont également indiquées. Ces informations concernent notamment le positionnement du multiplex (satellite, polarisation...).

A la fin de l'étape d'initialisation E1, le récepteur/décodeur possède tous les éléments pour démarrer l'enregistrement du flux MPEG correspondant à la séquence de télévision ST à partir de la reconnaissance dans le flux transport MPEG du marqueur de démarrage.

Le récepteur/décodeur selon l'invention doit être actif pour que l'identification du marqueur début, lance la mémorisation ou enregistrement sur le disque dur 40 (étape E2).

Le fichier comprenant la séquence de télévision ST peut être identifié par un nom symbolique qui permettra au moment de l'exécution du programme de télévision ST d'identifier le bon fichier.

Un système de nommage permet de mémoriser plusieurs fichiers, le nombre de fichiers mémorisés est fonction de la capacité du disque dur 40. La capacité du disque peut être de plusieurs Giga octets.

Pour rendre cette fonction efficace, il est avantageux que les informations d'initialisation de l'enregistrement contiennent la longueur du fichier qui sera diffusé. La longueur permet de vérifier que le disque dur permettra un enregistrement complet de la séquence correspondante.

Les informations pour effectuer l'enregistrement sont mémorisées au niveau de la chaîne de réception. Les circuits d'entrée sont positionnés pour la réception de la séquence de télévision ST à mémoriser. Ces positionnements concernent notamment le positionnement spatial ainsi que le positionnement de réception.

Le module interpréteur 52 attend la reconnaissance des marqueurs d'identification du flux MPEG relatif à la séquence de télévision ST. Dès reconnaissance des marqueurs, la fonction enregistreur du flux ST dans le disque 40 est effectué. Cet enregistrement est réalisé en mode transport, c'est-à-dire que l'ensemble des marqueurs du système d'information SI nécessaire à la restitution et la gestion du signal de télévision numérique sont mémorisés.

Le flux vidéo/audio MPEG inclus dans le mode transport est soit enregistré en mode clair après désembrouillage par le système d'accès conditionnel. Dans ces conditions, la restitution ou lecture du fichier enregistré s'effectuera directement à partir du flux vidéo/audio ainsi enregistré après désembrouillage.

L'enregistrement peut aussi être réalisé en mode embrouillé. L'enregistrement nécessite alors pour la lecture de disposer du système de désembrouillage actif et de disposer des droits d'utilisation de la séquence de télévision. Cet enregistrement permet alors de contrôler la lecture de la séquence de télévision ST.

L'enregistrement s'effectue sous la forme d'un fichier qui possède comme référence le nom donné à la séquence de télévision ST par l'application Internet WEA à travers le réseau Internet au moment de l'initialisation.

L'exécution simultanée et en synchronisme de l'application WEA et de la séquence de télévision ST est lancée à la demande de l'utilisateur (étape E3).

En pratique, l'application Internet WEA est pilotée par l'application qui se trouve sur le serveur Internet et l'application Internet correspondante chargée dans le récepteur/décodeur au cours de la phase d'initialisation précitée.

L'utilisateur, au moment du lancement de l'application Internet WEA est connecté au site Internet et la séquence de télévision ST est initialisée au début de séquence, en mode lecture sur le disque dur.

L'application Internet WEA indique la séquence des marqueurs actifs de manière à ce que les points de référence de la séquence de télévision ST soient transmis via l'interpréteur MPEG SI au processeur Internet 60 pour prendre des décisions sur l'exécution de l'application WEA et de la lecture de la séquence ST. Ces décisions peuvent être une action de l'application Internet locale ou une action de l'application Internet sur le serveur distant.

Le module de traitement Internet 60 peut prendre, le cas échéant, le contrôle du module d'enregistrement 40 à partir des ordres élémentaires qui peuvent être les suivants :
- mode arrêt : la vidéo est arrêtée et le son est ou non en arrêt (mise en veille du module d'enregistrement/lecture 40);
- mode pause : arrêt temporaire de la séquence ST qui reprend par l'ordre démarrage. L'image est figée, le son est en arrêt, en continuité ou en retour arrière d'un pas calculé ;
- mode démarrage pause: le redémarrage de la séquence de télévision (vidéo/audio) ST à partir du point de mise en pause ;
- mode démarrage: la reprise de l'ensemble vidéo/audio du point arrêt est similaire au démarrage-pause, mais suite à l'arrêt ;
- mode ralenti: le défilement des mouvements est ralenti ;
- mode accélération : les mouvements de la vidéo sont accélérés ;
- mode arrière lent ou rapide : retour en arrière avec mouvement uniquement sur les images ;
- saut avant: l'avancement de la séquence ST est réalisé sans vidéo pour qu'au cours du cycle de formation la séquence ST puisse aller à un sous-programme déterminé. Cette fonction nécessite l'utilisation des marqueurs transport ;
- saut arrière: saut arrière de la séquence vidéo apte à se positionner sur le compteur d'images grâce au marqueur.

Il est à remarquer que les fonctions du module d'enregistrement/lecture 40, à l'exception des sauts, sont accessibles directement par l'utilisateur par l'intermédiaire d'une télécommande 25. Les informations sont alors transmises au module d'enregistrement 40 et à l'application Internet WEA pour la synchronisation des deux flux (séquence de télévision ST et application Internet WEA).

L'étape d'exécution E3 comprend les sous-étapes suivantes :
- déroulement (lecture) de la séquence de télévision enregistrée ST (étape E5);
- contrôle de la séquence de télévision ST via l'interface relative au module d'enregistrement 40;
- détection des marqueurs d'action de l'application Internet WEA;
- exécution de l'application logiciel (étape E4) en interne WEA avec synchronisation du module d'enregistrement/lecture 40 ;
- le cas échéant, exécution de l'application logiciel à distance via le module Internet pour synchroniser le module d'enregistrement 40 ;
- envoi vers le processeur Internet 60 des informations concernant la cohabitation des deux flux FMPEG et FIP ( les deux flux comprennent des images vidéo émanant du module d'enregistrement/lecture 40 et les images graphiques émanant du processeur Internet 60.

Les informations globales de commande permettent de combiner les images issues des deux sources ST et WEA. Ce mode de combinaison peut être du type multifenêtrage, surimpression de différents plans, impression par exemple de l'image relative à la séquence de télévision ST sur un plan et l'image relative à l'Internet WEA sur un autre plan.

La combinaison peut s'effectuer aussi en mode texte. Le pointage par l'une des interfaces homme/machine de pointage (télécommande, clavier, terminal tactile) peut s'effectuer par manipulation sur les champs ou zones de l'écran du module de visualisation 18.

La gestion de l'image et des sons est assurée par une synchronisation entre la séquence de télévision ST émanant du module d'enregistrement/lecture 40 et les représentations graphiques faites par les programmes de formation WEA.

Des représentations doivent permettre une cohabitation entre les deux sources d'informations gérées par l'application Internet et les actions ponctuelles des interfaces homme/machine (télécommande, clavier, terminal tactile).

Le mode de combinaison des images doit permettre une visualisation pédagogique des informations. Cette visualisation peut s'effectuer par fenêtrage dans lequel les images sont imbriquées image dans image avec une des images qui s'incruste dans l'autre, chaque image pouvant être une image animée. Le fenêtrage peut s'effectuer image par rapport à image, l'écran associant les deux images dans deux fenêtres conjointes.

La combinaison peut s'effectuer par surimpression dans laquelle les différents plans sont superposés. Chaque point de chaque plan étant caractérisé et mémorisé ainsi que les conditions de surimpression.

Certains plans peuvent avoir des caractéristiques globales uniques, d'autres, au contraire, peuvent avoir des définitions élémentaires.

Par exemple, le plan n° 1 comprend des images vidéo émanant du module d'enregistrement 40, tandis que le plan n° 2 comprend des images vidéo avec une incrustation de texte, par exemple le sous-titre relatif à la séquence de télévision ST.

Le plan n° 3 peut être un plan graphique émanant de l'application Internet WEA. Le plan suivant n°4 peut être un plan graphique de manipulation.

Enfin, le plan n° 5 peut comprendre un plan d'images fixes pré-enregistré dans le module d'enregistrement ou dans l'application Internet.

Les interfaces homme-machine ou terminaux de saisie peuvent être des terminaux mobiles qui sont utilisés par l'utilisateur au cours des opérations de manipulation liées à l'exécution des programmes de formation.

Le boîtier de télécommande peut permettre à l'utilisateur de mettre en contrôle l'aspect télévision. Le boîtier de télécommande possède un ensemble de fonctions dont certaines peuvent avoir des actions sur le déroulement de l'application Internet.

Le boîtier de télécommande peut être équivalent à une télécommande de télévision numérique.

Un clavier du type infra-rouge ou radiofréquence peut permettre d'offrir une liaison infra-rouge entre le dispositif récepteur/décodeur et le clavier. Ce type de clavier permet d'introduire des codes alpha-numériques et permettre ainsi la composition de mots. Un tel clavier est plus aisé à manipuler qu'un boîtier de télécommande classique afin de réaliser des mots.

L'interface homme-machine peut être aussi un terminal tactile de type "drawing terminal" comprenant une zone de dessin par contact. Ce terminal est également équipé d'une liaison infrarouge.

Le dispositif décodeur/récepteur selon l'invention peut comprendre plusieurs raccordements périphériques, notamment des raccordements par des liaisons infrarouge, des liaisons numériques de type série tel que le bus USB, et des liaisons numériques rapides à haut débit de type 1394, par exemple pour les flux vidéo et informatiques de grand volume et à haut débit.

La liaison infra-rouge est avantageusement utilisée pour le boîtier de télécommande, pour le clavier et pour le terminal tactile. Le terminal peut être équipé d'une interface série USB permettant de connecter des équipements périphériques pour assumer des fonctions complémentaires de type imprimante, système vidéo-caméra ou chaîne audio.

Le raccordement d'une caméra numérique via l'interface USB permet d'enrichir la transmission vers le serveur Internet et notamment la connexion vers l'expert.

Le raccordement d'une chaîne audio permet de restituer des sons en complément à la chaîne audio qui équipe l'équipement.

La chaîne USB complémentaire permet de travailler par exemple avec l'expert sans passer par le module de visualisation. Les équipements USB de type système de manipulation, robot mécanique, permettent de compléter l'installation. Ces dispositifs fonctionnent en interface USB sous le contrôle d'un protocole de communication de type IP pour "Internet Protocol".

Il est à remarquer que les signaux issus du traitement des informations en provenance de la chaîne de télévision numérique et du traitement Internet sont mis en forme pour la visualisation finale et peuvent être ensuite transmis à un réseau interne ou externe à grande vitesse par l'intermédiaire d'un module de traitement numérique en connexion avec la liaison de type 1394.

Avantageusement, des liaison vidéo peuvent être effectuées par la liaison 1394 apte à transmettre des flux à des débits rapides de l'ordre de 200 à 400 mégabits/seconde. Le signal vidéo ainsi transmis peut être le signal de télévision reçu et transmis en mode transport vers un enregistreur numérique de télévision. Dans ce cas, la fonction de réception est identique à celle de l'enregistrement vidéo mais elle peut s'effectuer sur le signal pré-enregistré dans le module de stockage pour ainsi constituer une copie postérieure de la séquence de télévision ST.

Le signal vidéo peut être aussi le signal combiné télévision ST/Internet WEA, tel qu'il est visualisé sur le module de visualisation. L'image composite est resynchronisée pour être rendue compatible avec l'enregistreur vidéo ou un dispositif de transfert extérieur.

Le signal composite résulte de l'association des différentes sources internes en un signal unique qui est celui transmis au module de visualisation.

Ce signal composite est la combinaison du flux numérique ST et du flux numérique WEA pour des séquences animées ainsi que du flux d'images fixes pré-enregistrées mémorisé dans les moyens de mémorisation 62.

Le texte de l'image composite peut émaner du flux numérique ST en format MPEG ou bien de l'application Internet WEA sous le format IP. Les informations issues de l'utilisateur via les périphériques d'accès ou les interface homme/machine sont susceptibles aussi de participer à la composition de ce signal composite.

Enfin, des informations susceptibles d'être calculées ou traitées par le programme local WEA du traitement Internet sont susceptibles également de participer à la composition de ce signal composite.

Le processeur 12 du décodeur/récepteur participe à la mise en oeuvre du signal composite à partir de l'ensemble des informations issues du programme de télévision ST ou de l'application Internet WEA.

Le processeur 12 assure la mise en forme des signaux des sources, le positionnement géographique des images à visualiser, le positionnement dans l'espace (superpositionnement) des sources, ainsi que l'animation éventuelle de celles-ci.

Une gestion dimensionnelle des fenêtres ou des superpositions de celles-ci est également mise en oeuvre.

Le module de composition d'images est un module intelligent réalisé à partir d'un composant graphique qui effectue l'ensemble des opérations de dimensionnement, positionnement, et traitement nécessaire à l'élaboration de l'image finale. La partie synchronisation d'images au format du module de visualisation est également assurée par le module de composition image.

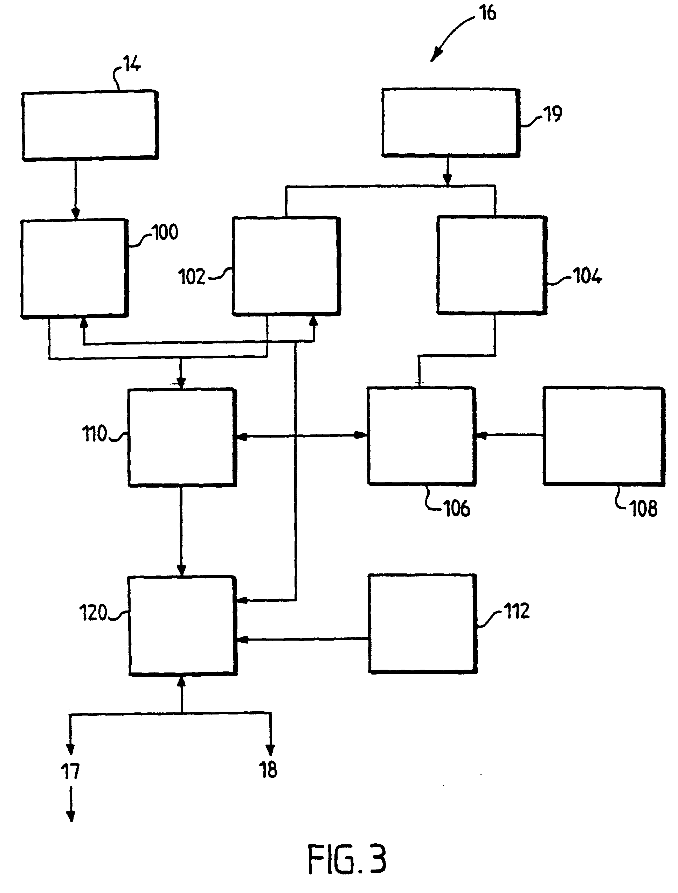

En référence à la figure 3, le module de composition d'image composite 16 comprend une mémoire 100 propre à stocker le flux numérique de télévision ST émanant du module de décodage 14, et une mémoire 102 propre à stocker le flux numérique émanant du module Internet 60/62.

La mémoire 100 est destinée à des traitements réduits car l'image est entièrement mise en forme dans le module du décodeur 14 (format MPEG).

Une mémoire 104 est prévu pour contenir le programme de composition d'images composites.

Un processeur graphique 106, sous la commande du programme de composition, traite les différentes informations issues des mémoires 100 et 102, ainsi que de sources locales 108, afin de composer une image composite native 110.

Un module de synchronisation 112 permet de synchroniser la composition exacte du signal vidéo/audio 120 du module de visualisation 18 ou de la liaison vidéo haut débit 17.

## Revendications

1. Dispositif récepteur/décodeur de télévision numérique du type comprenant :
- une interface d'entrée (2) propre à recevoir des signaux de télévision numérique en provenance d'un réseau de diffusion prédéterminé et à délivrer un flux numérique de signaux de télévision (FMPEG) ;
- un module démultiplexeur/extracteur (6,50) propre à extraire dans le flux numérique (FMPEG) des séquences numériques relatives à un programme de télévision choisi (ST);
- un module décodeur (14) propre à transformer les séquences numériques ainsi extraites en des signaux de télévision compatibles avec un module de visualisation (18),
- un module d'enregistrement et de lecture (40) des séquences numériques de programme de télévision numérique (ST);
- un module de traitement propre à recevoir des informations d'initialisation et de marquage relatives au moins au début et à la fin d'un programme de télévision choisi ainsi qu'à la réception/extraction des séquences numériques relatives audit programme de télévision, et à les comparer avec le flux numérique de télévision (FMPEG) provenant du module démultiplexeur/extracteur, ledit module de traitement étant propre en outre à commander, en réponse à une comparaison positive, l'enregistrement des séquences numériques relatives audit programme de télévision choisi (ST) ainsi que les informations d'initialisation et de marquage, dans le module d'enregistrement/lecture (40), et
- un module d'exécution propre, à la demande d'un utilisateur, à lancer, la lecture des séquences numériques relatives audit programme de télévision ainsi enregistré (ST), en synchronisme avec les informations d'initialisation et de marquage, **caractérisé en ce qu'**il comprend en outre un module de traitement complémentaire (60) apte à exécuter une application logiciel prédéterminée (WEA) contenant en outre lesdites informations d'initialisation et de marquage, l'application logiciel (WEA) étant exécutée en synchronisme et en interactivité avec la lecture du programme de télévision numérique ainsi enregistré à l'aide desdites informations d'initialisation et de marquage.

2. Dispositif selon la revendication 1, **caractérisé en ce que** le module de traitement complémentaire (60) est constitué de moyens de traitement de type Internet propre à coopérer avec des moyens de mémorisation (62) aptes à stocker un navigateur Internet servant à la navigation Internet, et **en ce que** le dispositif récepteur/décodeur comprend en outre un module de communication (30) apte à communiquer avec un serveur distant selon un protocole de communication de type Internet ou analogue.

3. Dispositif selon la revendication 2, **caractérisé en ce que** le module de communication (30) est apte au téléchargement de l'application logiciel (WEA) en provenance du serveur distant.

4. Dispositif selon la revendication 1, **caractérisé en ce qu'**il comprend un lecteur de support apte à lire un support informatique contenant l'application logiciel (WEA).

5. Dispositif selon la revendication 1, **caractérisé en ce qu'**il comprend des moyens propres à recevoir l'application logiciel (WEA) avec le flux de télévision numérique.

6. Dispositif selon l'une quelconque des revendications 1 à 5, **caractérisé en ce que** le module d'exécution est propre à lancer la lecture des séquences numériques relatives au programme de télévision choisi et l'exécution de l'application logiciel (WEA) sur le même module de visualisation (18).

7. Dispositif selon l'une quelconque des revendications 1 à 6, **caractérisé en ce qu'**il comprend en outre des moyens d'interface homme/machine (20, 21, 23, 25) dont l'actionnement permet à l'utilisateur d'interagir simultanément et en synchronisme dans la lecture du programme de télévision enregistré (SM) et dans l'exécution de l'application logiciel (WEA).

8. Dispositif selon les revendications 2 ou 3 et 7, **caractérisé en ce que** les moyens de traitement Internet (60) sont propres à coopérer avec le module de visualisation (18) ainsi que les moyens d'interface homme/machine du dispositif récepteur/décodeur.

9. Dispositif selon la revendication 8, **caractérisé en ce que** le module démultiplexeur/extracteur (6, 50, 52) est apte à extraire les informations d'initialisation et de marquage du programme de télévision et à les transmettre aux moyens de traitement Internet (60), afin de permettre, à la demande de l'utilisateur, l'exécution de l'application Internet (WEA) en local et/ou en coopération avec le serveur distant, en synchronisme avec la lecture du programme de télévision enregistré.

10. Dispositif selon la revendication 2, **caractérisé en ce que** les moyens de traitement Internet (60) sont propres, en coopération avec les moyens de traitement (12) du récepteur/décodeur, à piloter le module d'enregistrement/lecture (40).

11. Dispositif selon la revendication 10, **caractérisé en ce que** les moyens de traitement Internet (60) sont propres à délivrer au module d'enregistrement/lecture (40) des ordres de type arrêt, pause, démarrage pause, démarrage, ralenti, accélération, arrière, saut avant, saut arrière, etc.

12. Dispositif selon l'une des revendications précédentes, **caractérisé en ce qu'**il comprend en outre un module de composition d'images (16) propre à recevoir les images vidéo issues du module décodeur (14) ainsi que les images graphiques issues des moyens de traitement Internet (60), afin de la combiner, selon un mode de composition d'images choisi.

13. Dispositif selon la revendication 12, **caractérisé en ce que** le module de composition d'images est de type surimpression, multifenêtrage, texte, association d'images.

14. Dispositif selon la revendication 12, **caractérisé en ce que** le module de composition d'images (16) comprend :
- une première mémoire (100) propre à contenir les images vidéo issues du module décodeur (14);
- une seconde mémoire (102) propre à contenir les informations graphiques issues des moyens de traitement Internet (60,19);
- une troisième mémoire (104) propre à contenir un programme de composition d'images ;
- des moyens de traitement d'images (106) propres à extraire les informations choisies dans les première et seconde mémoires selon le programme de composition afin de réaliser les images composites ;
- un module de synchronisation (112) du module de visualisation (18) afin de synchroniser la composition d'images issues des deux mémoires.

15. Dispositif selon l'une des revendications précédentes, **caractérisé en ce qu'**il comprend une interface de type série et/ou une interface de type liaison haut débit afin de connecter des équipements périphériques de type imprimante, système vidéo/caméra, chaîne audio, périphérique vidéo.

16. Procédé de traitement de signaux de télévision numérique du type comprenant les étapes suivantes:
- a) recevoir des signaux de télévision numérique en provenance d'un réseau de diffusion prédéterminé et délivrer un flux numérique de signaux de télévision (FMPEG) ;
- b) extraire dans le flux numérique (FMPEG) des séquences numériques relatives à un programme de télévision choisi (ST); et
- c) transformer les séquences numériques ainsi extraites en des signaux de télévision compatibles avec un module de visualisation,
- d) recevoir des informations d'initialisation et de marquage relatives au moins au début et à la fin d'un programme de télévision choisi ainsi qu'à la réception/extraction des séquences numériques relatives audit programme de télévision choisi ; et les comparer avec le flux numérique de télévision (FMPEG) provenant du module démultiplexeur/extracteur,
- e) commander, en réponse à une comparaison positive, l'enregistrement des séquences numériques relatives audit programme de télévision choisi (ST) ainsi que les informations d'initialisation et de marquage, dans le module d'enregistrement/lecture (40), et
- f) à la demande d'un utilisateur, lancer, la lecture des séquences numériques relatives audit programme de télévision ainsi enregistré (ST), **caractérisé en ce qu'**il comprend en outre une étape préalable de mise en oeuvre d'une application logiciel (WEA) susceptible de contenir en outre lesdites informations d'initialisation et de marquage, et **en ce que** l'étape f) de lecture est exécutée en synchronisme et interactivité avec l'exécution de l'application logiciel (WEA) à l'aide des informations d'initialisation et de marquage.

17. Produit logiciel pour dispositif récepteur/décodeur de télévision numérique, du type comprenant des informations d'initialisation et de marquage relatives au moins au début et à la fin d'un programme de télévision numérique choisi ainsi qu'à la réception/extraction des séquences numériques relatives audit programme de télévision choisi, lesdites informations d'initialisation et de marquage étant destinées à être comparées à un flux numérique de télévision, et en cas de comparaison positive, ledit produit logiciel étant apte à commander l'enregistrement des séquences numériques relatives audit programme de télévision choisi ainsi que les informations d'initialisation et de marquage, **caractérisé en ce que** lesdites informations d'initialisation et de marquage sont contenues dans une application logiciel (WEA) susceptible d'être exécutée en synchronisme et interactivité avec la lecture du programme de télévision numérique ainsi enregistré à l'aide des informations d'initialisation et de marquage.

18. Produit logiciel selon la revendication 17, **caractérisé en ce que** l'application logiciel (WEA) est susceptible d'être exécutée en ligne avec un serveur distant.

19. Produit logiciel selon la revendication 17, **caractérisé en ce que** l'application logiciel (WEA) est susceptible d'être contenue sur un support informatique, et/ou distribuée par téléchargement.

## Patentansprüche

1. Empfänger/Decoder-Vorrichtung für digitales Fernsehen vom Typ mit:
- einer Eingangsschnittstelle (2), geeignet zum Empfang von digitalen Fernsehsignalen von einem vorbestimmten Sendenetz und zur Lieferung eines digitalen Stroms von Fernsehsignalen (FMPEG),
- einem Demultiplexer/Extrahierer-Modul (6, 50), geeignet zur Extrahierung von digitalen Folgen für ein gewähltes Fernsehprogramm (ST) in dem digitalen Strom (FMPEG),
- einem Decoder-Modul (14), geeignet zur Umsetzung der derart extrahierten digitalen Folgen in Fernsehsignale, die mit einem Wiedergabemodul kompatibel (18) sind,
- einem Modul (40) zur Aufzeichnung und zur Wiedergabe von digitalen Folgen des digitalen Fernsehprogramms (ST),
- einem Verarbeitungsmodul, geeignet zum Empfang von Initialisierungs- und Markierinformationen für wenigstens den Start und das Ende eines gewählten digitalen Fernsehprogramms sowie zum Empfang/Extrahierung der digitalen Folgen für das gewählte Fernsehprogramm, und zu deren Vergleich mit dem digitalen Fernsehstrom (FMPEG) von dem Demultiplexer/Extrahierer-Modul, wobei das Verarbeitungsmodul außerdem in der Lage ist, aufgrund eines positiven Vergleichs die Aufzeichnung der digitalen Folgen für das gewählte Fernsehprogramm (ST) sowie Initialisierungs- und Markierinformationen in dem Aufzeichnungs/Wiedergabe-Modul (40) zu steuern, und
- einem Ausführungsmodul, geeignet zum Auslösen der Wiedergabe der digitalen Folgen für das Fernsehprogramm sowie die Aufzeichnung (ST) auf Anforderung eines Benutzers synchron mit den Initialisierungs- und Markierinformationen,
**gekennzeichnet durch**
ein komplementäres Verarbeitungsmodul (60) zur Ausführung einer vorbestimmten Software-Anwendung (WEA), enthaltend außerdem die Initialisierungs- und Markierinformationen, dass die Software-Anwendung (WEA) synchron und interaktiv mit dem Lesen des digitalen Fernsehprogramms erfolgt und so mittels der Initialisierungs- und Markierinformationen aufgezeichnet wird.

2. Vorrichtung nach Anspruch 1, **dadurch gekennzeichnet, dass** das komplementäre Verarbeitungsmodul (60) durch Verarbeitungsmittel vom Typ Internet gebildet ist, die geeignet sind zum Zusammenarbeiten mit Speichermitteln (62) zur Speicherung eines Internet-Navigators für die Internet-Navigation, und dass die Empfänger/Decoder-Vorrichtung außerdem ein Kommunikationsmodul (30) zur Kommunikation mit einem entfernten Server gemäß einem Kommunikationsprotokoll vom Typ Internet oder dergleichen enthält.

3. Vorrichtung nach Anspruch 2, **dadurch gekennzeichnet, dass** das Kommunikationsmodul (30) zur Herunterladung der Software-Anwendung (WEA) von dem entfernten Server in der Lage ist.

4. Vorrichtung nach Anspruch 1, **gekennzeichnet durch** einen Leser zum Lesen eines Informationsträgers, die die Software-Anwendung (WEA) enthält.

5. Vorrichtung nach Anspruch 1, **gekennzeichnet durch** Mittel zum Empfang der Software-Anwendung (WEA) mit dem digitalen Fernsehstrom.

6. Vorrichtung nach einem der Ansprüche 1 bis 5, **dadurch gekennzeichnet, dass** das Ausführungsmodul zum Auslösen des Lesens der digitalen Folgen für das gewählte Fernsehprogramm und die Ausführung der Software-Anwendung (WEA) auf demselben Wiedergabemodul (18) geeignet ist.

7. Vorrichtung nach einem der Ansprüche 1 bis 6, **gekennzeichnet durch** Schnittstellenmittel Mensch/Maschine (20, 21, 23, 25), deren Betätigung es dem Benutzer ermöglicht, gleichzeitig und synchron in dem Lesen des aufgezeichneten Fernsehprogramms (SM) und in der Ausführung der Software-Anwendung (WEA) zu interagieren.

8. Vorrichtung nach Anspruch 2 oder 3 und 7, **dadurch gekennzeichnet, dass** die Mittel zur Internet-Verarbeitung (60) zum Zusammenarbeiten mit dem Wiedergabemodul (18) sowie mit den Schnittstellenmitteln Mensch/Maschine der Empfänger/Decoder-Vorrichtung geeignet sind.

9. Vorrichtung nach Anspruch 8, **dadurch gekennzeichnet, dass** das Demultiplexer/Extrahierer-Modul (6, 50, 52) in der Lage ist zur Extrahierung von Initialisierungs- und Markierinformationen des Fernsehprogramms und zu ihrer Übertragung zu den Internet-Verarbeitungsmitteln (60), um auf Anforderung des Benutzers die Durchführung der Internet-Anwendung (WEA) an der Stelle und/oder in Zusammenarbeit mit dem entfernten Server synchron mit dem Lesen des aufgezeichneten Fernsehprogramms zu ermöglichen.

10. Vorrichtung nach Anspruch 2, **dadurch gekennzeichnet, dass** die Internet-Verarbeitungsmittel (60) in der Lage sind, in Zusammenarbeit mit den Verarbeitungsmitteln (12) des Empfänger/Decoders das Aufzeichnungs/Lese-Modul (40) zu steuern.

11. Vorrichtung nach Anspruch 10, **dadurch gekennzeichnet, dass** die Internet-Verarbeitungsmittel (60) in der Lage sind, zu dem Aufzeichnungs/Wiedergabe-Modul (40) Befehle für Stop, Pause, Pausenstart, Start, Zeitdehnung, Zeitraffung, Rücklauf, Vorwärtsspringen, Rückwärtsspringen, usw., zu liefern.

12. Vorrichtung nach einem der vorangehenden Ansprüche, **gekennzeichnet durch** ein Modul zur Zusammensetzung von Bildern (16), das Videobilder von dem Decodermodul (14) sowie graphische Bilder von den Internet-Verarbeitungsmitteln (60) empfängt, um sie gemäß einem gewählten Bildzusamensetzungs-Modus zu kombinieren.

13. Vorrichtung nach Anspruch 12, **dadurch gekennzeichnet, dass** das Modul zur Zusammensetzung von Bildern vom Typ mit Überlagerung, Multifensterbildung, Text, Assoziation von Bildern, ist.

14. Vorrichtung nach Anspruch 12, **dadurch gekennzeichnet, dass** das Modul zur Zusammensetzung der Bilder (16) folgendes enthält:
- einen ersten Speicher (100) für die Videobilder von dem Decoder-Modul (14),
- einen zweiten Speicher (102) für die graphischen Informationen von den Internet-Verarbeitungsmitteln (60, 19),
- einen dritten Speicher (104) für ein Programm für die Zusammensetzung von Bildern,
- Mittel zur Verarbeitung von Bildern (106) zur Extrahierung der Informationen, die in dem ersten und dem zweiten Speicher gemäß dem Zusammensetzungsprogramm gewählt sind, um die zusammengesetzten Bilder zu realisieren,
- ein Synchronisiermodul (112) des Wiedergabemoduls (18) zur Synchronisierung der Zusammensetzung der Bilder von den beiden Speichern.

15. Vorrichtung nach einem der vorangehenden Ansprüche, **gekennzeichnet durch** eine Reihen-Schnittstelle und/oder eine Verbindungsschnittstelle mit hoher Datenrate, um die peripheren Geräte vom Drucktyp, Video/Kamera-Systeme, Audiokette, Videoperipherie miteinander zu verbinden.

16. Verfahren zur Bearbeitung von digitalen Fernsehsignalen vom Typ mit den folgenden Schritten:
- a) Empfang der digitalen Fernsehsignale von dem vorbestimmten Sendenetz und Lieferung eines digitalen Stroms von Fernsehsignalen (FMPEG),
- b) Extrahierung in dem digitalen Strom (FMPEG) der digitalen Folgen für ein gewähltes Fernsehprogramm (ST) und
- c) Umsetzung der derart extrahierten digitalen Folgen in Fernsehsignale, die mit einem Wiedergabemodul kompatibel sind,
- d) Empfang der Initialisierungs- und Markierinformationen wenigstens zu Beginn und am Ende eines gewählten Fernsehprogramms bis zu dem Empfang/Extrahierung von digitalen Folgen für das gewählte Fernsehprogramm, und deren Vergleich mit dem digitalen Fernsehstrom (FMPEG) von dem Demultiplexer/Extrahierer-Modul,
- e) Steuerung, aufgrund eines positiven Vergleichs, der Aufzeichnung der digitalen Folgen für das gewählte Fernsehprogramm (ST) sowie die Initialisierungsund Markierinformationen in dem Aufzeichnungs/Lese-Modul (40) und
- f) Auslösung aufgrund einer Benutzeranforderung des Lesens der digitalen Folgen für das derart aufgezeichnete Fernsehprogramm (ST), **gekennzeichnet durch** einen vorangehenden Schritt zur Durchführung einer Software-Anwendung (WEA), die unter anderem die Initialisierungs- und Markierinformationen enthält, wobei der Schritt f) des Lesens synchron und in Zusammenarbeit mit der Ausführung der Software-Anwendung (WEA) mittels der Initialisierungs- und Markierinformationen erfolgt.

17. Software-Produkt für eine Empfänger/Decoder-Vorrichtung für digitales Fernsehen mit Initialisierungs- und Markierinformationen wenigstens zu Beginn und am Ende eines gewählten digitalen Fernsehprogramms sowie für den Empfang/Extrahierung der digitalen Folgen für das gewählte Fernsehprogramm, wobei die Initialisierungs- und Markierinformationen dafür bestimmt sind, mit einem digitalen Fernsehstrom verglichen zu werden, und im Falle eines positiven Vergleichs das Software-Produkt in der Lage ist, die Aufzeichnung der digitalen Folgen für das derart gewählte Fernsehprogramm sowie die Initialisierungs- und Markierinformationen zu steuern, **dadurch gekennzeichnet, dass** die Initialisierungs- und Markierinformationen in einer Software-Anwendung (WEA) enthalten sind, die in Synchronismus und in Zusammenarbeit mit dem derart aufgezeichneten numerischen Fernsehprogramm mittels der Initialisierungs- und Markierinformationen ausgeführt werden.

18. Software-Produkt nach Anspruch 17, **dadurch gekennzeichnet, dass** die Software- Anwendung (WEA) mit einem entfernten Server über die Leitung laufen kann.

19. Software-Produkt nach Anspruch 17, **dadurch gekennzeichnet, dass** die Software-Anwendung (WEA) in einem Datenträger enthalten sein und/oder durch eine Herunterladung verteilt werden kann.

## Claims

1. Digital-television receiver/decoder device of the type comprising:
- an input interface (2) suitable for receiving digital-television signals originating from a predetermined broadcast network and for delivering a digital stream of television signals (FMPEG);
- a demultiplexer/extractor module (6, 50) suitable for extracting, from the digital stream (FMPEG), digital sequences relating to a chosen television programme (ST); and
- a decoder module (14) suitable for converting the digital sequences thus extracted into television signals compatible with a visual-display module (18),
- a module (40) for recording and playing digital sequences of digital-television programmes(ST);
- a processing module suitable for receiving initialization and marking information relating at least to the start and to the end of a chosen television programme, as well as to the reception/extraction of the digital sequences relating to said television programme, and for comparing it with the television digital stream (FMPEG) originating from the demultiplexer/extractor module, said processing module being suitable, moreover, in response to a positive comparison, for causing the recording of the digital sequences relating to said chosen television programme (ST) as well as the initialization and marking information, in the record/replay module (40), and
- an execution module suitable, at the request of a user, for launching the playing of the digital sequences relating to said television programme (ST) thus recorded, in synchronism with the initialization and marking information, **characterized in that** it further comprises a supplementary processing module (60) able to run a predetermined software application (WEA) further containing said initialization and marking information, the software application (WEA) being run in synchronism and in interactive mode with the playing of the digital-television programme thus recorded with the aid of said initialization and marking information.

2. Device according to Claim 1, **characterized in that** the supplementary processing module (60) consists of Internet-type processing means suitable for cooperating with memory-storage means (62) able to store an Internet browser serving for Internet browsing, and **in that** the receiver/decoder device further comprises a communications module (30) able to communicate with a remote server according to an Internet-type communications protocol or the like.

3. Device according to Claim 2, **characterized in that** the communications module (30) is able to download the software application (WEA) originating from the remote server.

4. Device according to Claim 1, **characterized in that** it comprises a media player able to read a data medium containing the software application (WEA).

5. Device according to Claim 1, **characterized in that** it comprises means suitable for receiving the software application (WEA) with the digital-television stream.

6. Device according to any one of Claims 1 to 5, **characterized in that** the execution module is suitable for launching the playing of the digital sequences relating to the chosen television programme and the running of the software application (WEA) on the same visual-display module (18).

7. Device according to any one of Claims 1 to 6, **characterized in that** it further comprises man/machine interface means (20, 21, 23, 25), the actuation of which allows the user to interact simultaneously and in synchronism in the playing of the recorded television programme (ST) and in the running of the Internet application (WEA).

8. Device according to Claims 2 or 3 and 7,
**characterized in that** the Internet processing means (60) are suitable for cooperating with the visual-display module (18) as well as the man/machine interface means of the receiver/decoder device.

9. Device according to Claim 8, **characterized in that** the demultiplexer/extractor module (6, 50, 52) is able to extract the initialization and marking information of the television programme and to send it to the Internet processing means (60) so as, at the request of the user, to allow running of the Internet application (WEA) in local mode and/or in cooperation with the remote server, in synchronism with the playing of the recorded television programme.

10. Device according to Claim 2, **characterized in that** the Internet processing means (60) are suitable, in cooperation with the processing means (12) of the receiver/decoder, for driving the record/replay module (40).

11. Device according to Claim 10, **characterized in that** the Internet processing means (60) are suitable for delivering, to the record/replay module (40), commands of the stop, pause, pause start, start, slow, fast forward, rewind, jump forward, jump back, etc, type.

12. Device according to one of the preceding claims, **characterized in that** it further comprises an image-composition module (16) suitable for receiving the video images output by the decoder module (14) as well as the graphics images output by the Internet processing means (60), so as to combine them according to a chosen image-composition mode.

13. Device according to Claim 12, **characterized in that** the image-composition mode is of overprint, multi-windowing, text, image-combining type.

14. Device according to Claim 12, **characterized in that** the image-composition module (16) comprises:
- a first memory (100) suitable for containing the video images output by the decoder module (14);
- a second memory (102) suitable for containing the graphics information output by the Internet processing means (60, 19);
- a third memory (104) suitable for containing an image-composition program;
- image-processing means (106) suitable for extracting the chosen information from the first and second memories depending on the composition program, so as to produce the composite images;
- a module (112) for synchronization of the visual-display module (18), so as to synchronize the composition of images output by the two memories.

15. Device according to one of the preceding claims, **characterized in that** it comprises an interface of serial type and/or an interface of high-throughput link type so as to connect peripheral equipment of the printer, video/camera system, audio suite or video peripheral type.

16. Method of processing digital-television signals of the type comprising the following stages:
- a) receiving digital-television signals originating from a predetermined broadcast network and delivering a digital stream of television signals (FMPEG);
- b) extracting, from the digital stream (FMPEG), digital sequences relating to a chosen television programme (ST); and
- c) converting the digital sequences thus extracted into television signals compatible with a visual-display module,
- d) receiving initialization and marking information relating at least to the start and to the end of a chosen television programme, as well as to the reception/extraction of the digital sequences relating to said chosen television programme, and comparing it with the television digital stream (FMPEG) originating from the demultiplexer/extractor module;
- e) in response to a positive comparison, causing the recording of the digital sequences relating to said chosen television programme (ST) as well as the initialization and marking information, in the record/replay module (40), and
- f) at the request of a user, launching the playing of the digital sequences relating to said television programme (ST) thus recorded, **characterized in that** it further comprises a prior step of implementing a software application (WEA) able to contain, in addition, said initialization and marking information, and **in that** the playing step f) is run in synchronism and in interactive mode with the running of the software application (WEA) with the aid of the initialization and marking information.

17. Software product for a digital-television receiver/decoder device, of the type comprising initialization and marking information relating at least to the start and to the end of a chosen digital-television programme, as well as to the reception/extraction of the digital sequences relating to said chosen television programme, said initialization and marking information being intended to be compared with a television digital stream, and, in the event of a positive comparison, said software product being able to cause the recording of the digital sequences relating to said chosen television programme as well as the initialization and marking information, **characterized in that** said initialization and marking information is contained in a software application (WEA) capable of being run in synchronism and in interactive mode with the playing of the digital-television programme thus recorded with the aid of the initialization and marking information.

18. Software product according to Claim 17, **characterized in that** the software application (WEA) is capable of being run on-line with a remote server.

19. Software product according to Claim 17, **characterized in that** the software application (WEA) is capable of being contained on a data medium, and/or distributed by downloading.
